# EUROPÄISCHE PATENTSCHRIFT

(11) **EP 1 749 191 B1**
(45) Veröffentlichungstag und Bekanntmachung des Hinweises auf die Patenterteilung: **24.12.2014**
(21) Anmeldenummer: 05750431.8
(22) Anmeldetag: 14.05.2005
(51) Int. Cl.: G01H 1/00

(54) **FLUG-SENSOR FÜR ELEKTRONISCHE KOMPONENTEN ZUM EINSATZ IN FLUGZEUGEN**
TRAVEL SENSOR FOR ELECTRONIC COMPONENTS FOR USE IN AIRCRAFTS
CAPTEUR DE VOL POUR COMPOSANTS ELECTRONIQUES UTILISES DANS DES AVIONS

(30) Priorität: 28.05.2004 DE 102004026711
(43) Veröffentlichungstag der Anmeldung: 07.02.2007
(73) Patentinhaber: Airbus Operations GmbH, 21129 Hamburg (DE)
(72) Erfinder: EDER, Johannes, 85591 Vaterstetten (DE); HECHTENBERG, Kurt-Volker, 83052 Bruckmühl (DE); HALM, Jürgen, 27777 Ganderkesee/Redhorn (DE)
(74) Vertreter: Schäflein, Christian Georg
(86) Internationale Anmeldenummer: PCT/DE2005/000885
(87) Internationale Veröffentlichungsnummer: WO 2005/116592

(56) Entgegenhaltungen:
- EP-A- 0 286 120
- EP-A- 1 378 446
- DE-A1- 19 843 615
- DE-U1- 29 720 539
- US-A- 3 070 995
- US-A- 4 581 571
- US-A- 5 004 963
- US-B1- 6 176 136
- US-B1- 6 301 572

## Beschreibung

Die vorliegende Erfindung betrifft einen Flug-Sensor für elektronische Komponenten zum Einsatz in Flugzeugen, ein Verfahren zur Steuerung elektronischer Komponenten an Bord von Flugzeugen, sowie eine elektronische Komponente zum Einsatz in Flugzeugen. US5004963 beschreibt einen Flugsensor für elektronische Komponenten zum Einsatz in Flugzeugen mit einem Vibrationssensor zur Umwandlung von Körperschall an Bord eines Flugzeuges in elektrische Vibrationssignale und einem Komparator zur Erzeugung eines Flugzustandssignals. An Bord von Flugzeugen muss aus Sicherheitsgründen gewährleistet sein, dass keine Störungen der Systeme durch elektromagnetische Wellen auftreten. Aus diesem Grund benötigen alle elektronischen Komponenten, die zum Einbau in Flugzeugen vorgesehen sind, eine besondere Zulassung. Damit soll verhindert werden, dass diese elektronischen Komponenten störende Funkwellen bzw. elektromagnetische Wellen abstrahlen und dadurch die Sicherheit des Flugbetriebs beeinträchtigen. Diese besondere Zulassung kann nur dann erteilt werden, wenn sichergestellt ist, dass die Komponente während des Fluges keine störenden bzw. die Sicherheit beeinträchtigenden Funkwellen abstrahlt.

Derartige Zulassungsverfahren sind sehr aufwendig und mit hohen Kosten verbunden. Darüber hinaus besteht die Gefahr, dass trotz des aufwendigen Zulassungsverfahrens Fehlerquellen möglich sind.

Es ist deshalb die Aufgabe der vorliegenden Erfindung, die Sicherheit beim Einsatz elektronischer Komponenten in Flugzeugen zu erhöhen und eine einfachere Zulassung für Funkwellen emittierende Komponenten zu ermöglichen.

Diese Aufgabe wird gelöst durch den Flug-Sensor gemäß Patentanspruch 1, durch das Verfahren zur Steuerung elektronischer Komponenten gemäß Patentanspruch 11 und durch die elektronische Komponente zum Einsatz in Flugzeugen gemäß Patentanspruch 15. Weitere vorteilhafte Merkmale, Aspekte und Details der Erfindung ergeben sich aus den abhängigen Ansprüchen, der Beschreibung und der Zeichnung.

Der erfindungsgemäße Flug-Sensor für elektronische Komponenten ist insbesondere zum Einsatz in Flugzeugen geeignet und umfasst einen Vibrationssensor zur Umwandlung von Körperschall in elektrische Vibrationssignale, eine Filtereinrichtung, welche die Vibrationssignale empfängt, zur Bestimmung des Anteils von Triebwerksgeräuschen eines Flugzeugs und des Gesamtgeräusches in den Vibrationssignalen, und einen Komparator, der die Triebwerksgeräusche mit dem Gesamtgeräusch vergleicht und aus dem Ergebnis ein Flugzustands-Signal erzeugt, das einen definierten Flugzustand des Flugzeugs repräsentiert.

Durch den erfindungsgemäßen Flug-Sensor wird die Sicherheit an Bord von Flugzeugen weiter erhöht. Durch die Erzeugung des Flugzustands-Signals können elektronische Komponenten entsprechend angesteuert werden, wobei sichergestellt ist, dass während des Fluges die jeweilige Komponente nicht senden kann. Die Erfindung ermöglicht, dass elektronische Komponenten, die mit dem erfindungsgemäßen Flug-Sensor ausgestattet sind, selbständig sicher erkennen können, ob sie sich in einem fliegenden oder in einem nichtfliegenden Flugzeug befinden. Elektronische Komponenten zum Einsatz in Flugzeugen können durch den erfindungsgemäßen Flug-Sensor kostengünstig und sicher am Senden störender Funksignale gehindert werden. Weiterhin lässt sich der Flug-Sensor in einer sehr kleinen Bauweise realisieren, so dass er insbesondere auch als standardisiertes Sicherheitselement für elektronische Komponenten zum Einsatz in Flugzeugen geeignet ist. Dies führt zu einer weiteren Erhöhung der Sicherheit und zur Vereinfachung des Zulassungsverfahrens für die elektronischen Komponenten.

Bevorzugt enthält das Flugzustands-Signal, das vom Komparator ausgegeben wird, eine Information über "Flug" oder "Nicht-Flug" als Flugzustand. Aufgrund dieser beiden möglichen Zustände des Flugzustands-Signals kann eine elektronische Komponente am Senden von Funkwellen gehindert oder nicht gehindert werden. Insbesondere aufgrund der Entscheidung anhand von nur zwei möglichen Zuständen bietet der Flug-Sensor eine besonders hohe Sicherheit, wobei er kostengünstig und auf einfache Weise mit elektronischen Komponenten zum Einsatz in Flugzeugen verbunden werden kann.

Vorteilhafterweise umfasst die Filtereinrichtung einen NF-Filter, der für den Frequenzbereich der Triebwerksgeräusche ausgelegt ist. Dadurch können die Triebwerksgeräusche mit Standardbauteilen einfach und sicher erkannt werden, so dass eine kostengünstige Realisierung möglich ist.

Vorteilhaft umfasst die Filtereinrichtung einen breitbandigen Schwellwertfilter zur Erzeugung einer Komparatorschwelle. Dadurch kann aus den gesamten Geräuschsignalen eine geeignete Schwelle für den Komparator erzeugt werden, so dass der Zustand des Fluges oder Nicht-Fluges besonders gut und sicher erkannt werden kann. Insbesondere umfasst die Filtereinrichtung bevorzugt mindestens einen RMS-Konverter zur Umwandlung von Filtersignalen in Effektivwerte, insbesondere in proportionale Gleichspannungen.

Vorteilhaft umfasst die Filtereinrichtung einen NF-Kanal zur Bestimmung des Anteils der Triebwerksgeräusche und einen zum NF-Kanal parallel geschalteten Schwellwertkanal zur Erzeugung einer Komparatorschwelle. Dadurch kann der Komparator das Triebwerksgeräusch sicher mit dem Gesamtgeräusch vergleichen und damit über Flug oder Nicht-Flug entscheiden.

Bevorzugt umfasst der NF-Kanal einen NF-Filter mit einem nachgeschalteten ersten RMS-Konverter. Die Reaktionszeit des Flugsensors ist eine wichtige Größe, die im bzw. durch den RMS-Konverter des NF-Kanals bestimmt wird. Durch die besondere Ausgestaltung ergibt sich eine geringe Reaktionszeit.

Bevorzugt umfasst der Schwellwert-Kanal einen Schwellwert-Filter mit einem nachgeschalteten zweiten RMS-Konverter.

Vorteilhafterweise ist der Komparator der Filtereinrichtung nachgeschaltet und erzeugt ein digitales Ausgangssignal als Flugzustands-Signal. Dadurch kann das Ausgangssignal des Komparators besonders einfach verwendet werden. Es können kostengünstige und einfache Schnittstellen zu den betreffenden elektronischen Komponenten geschaffen werden.

Gemäß einem Aspekt der Erfindung wird ein Verfahren zur Steuerung elektronischer Komponenten an Bord von Flugzeugen angegeben, das die folgenden Schritte umfasst:
Erfassen von Körperschall an Bord eines Flugzeugs; Bestimmen des Anteils von Triebwerksschall in dem Körperschall; Erzeugen eines Flugzustands-Signals in Abhängigkeit vom Triebwerksschall-Anteil, wobei das Flugzustands-Signal den Zustand
"Flug" oder "Nicht-Flug" repräsentiert; Ansteuern einer elektronischen Komponente mit dem Flugzustands-Signal derart, dass beim Zustand "Flug" eine Abstrahlung von störenden elektromagnetischen Wellen verhindert wird.

Durch das erfindungsgemäße Steuerungsverfahren wird die Sicherheit an Bord von Flugzeugen erhöht und eine Möglichkeit zur Vereinfachung und Beschleunigung der Zulassungsverfahren für elektronische Komponenten geschaffen.

Bevorzugt wird der Triebwerksschall mit dem gesamten erfassten Schall verglichen und auf der Grundlage des Vergleichs wird über den Zustand "Flug" oder "Nicht-Flug" entschieden. Dadurch ergibt sich eine besonders einfache und sichere Möglichkeit, in Abhängigkeit vom jeweiligen Flugzustand die Abstrahlung störender elektromagnetischer Wellen von elektronischen Komponenten zu verhindern.

Vorteilhafterweise wird die elektronische Komponente abgeschaltet, wenn das Flugzustands-Signal den Zustand "Flug" repräsentiert. Dadurch ergibt sich eine besondere Möglichkeit bei solchen Komponenten, die im Flugbetrieb nicht benötigt werden bzw. im ausgeschalteten Zustand sein müssen, um die Sicherheit an Bord von Flugzeugen zu gewährleisten.

Bevorzugt wird zur Durchführung des erfindungsgemäßen Verfahrens ein erfindungsgemäßer Flugsensor, wie er hier beschrieben ist, verwendet.

Gemäß einem weiteren Aspekt wird eine elektronische Komponente zum Einsatz in Flugzeugen geschaffen, die einen erfindungsgemäßen Flug-Sensor, wie er hier beschrieben ist, umfasst.

Vorteile und Merkmale, die im Zusammenhang mit dem Flug-Sensor beschrieben sind, gelten auch für das erfindungsgemäße Verfahren und für elektronische Komponenten, die mit dem Flug-Sensor ausgerüstet sind, ebenso wie Vorteile und Merkmale, die im Zusammenhang mit dem Verfahren beschrieben sind, auch für den erfindungsgemäßen Flug-Sensor gelten.

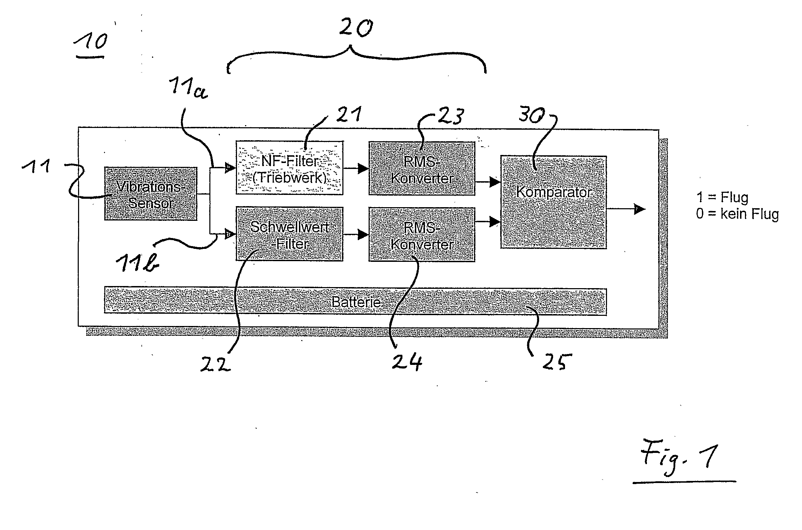

Nachfolgend wird die Erfindung anhand der Zeichnung beschrieben, wobei
- **Fig. 1**: ein Blockschaltbild eines Flug-Sensors gemäß einer besonders bevorzugten Ausführungsform der Erfindung schematisch zeigt.

Der in Figur 1 gezeigte Flug-Sensor 10 umfasst einen Vibrationssensor 11, der Körperschall detektiert und in elektrische Vibrationssignale umwandelt. Der Vibrationssensor 11 ist elektrisch mit einer Filtereinrichtung 20 gekoppelt, welche die Vibrationssignale empfängt und den Anteil von Triebwerksgeräuschen des Flugzeugs und des Gesamtgeräusches in den Vibrationssignalen bestimmt. Der Filtereinrichtung 20 nachgeschaltet ist ein Komparator 30, der die Triebwerksgeräusche mit dem Gesamtgeräusch vergleicht und aus dem Ergebnis ein Flugzustands-Signal erzeugt. Das Flugzustands-Signal repräsentiert einen definierten Flugzustand des Flugzeugs.

Der von dem Komparator ermittelte Flugzustand ist im vorliegenden Beispiel entweder der Zustand "1" bzw. "Flug" oder der Zustand "0" bzw. "kein-Flug". Dieses digitale Ausgangssignal des Komparators 30 kann besonders einfach verwendet werden und dient zur Ansteuerung einer elektronischen Komponente, beispielsweise einem Funktransponder, RFIDs, passive und aktive elektronische Komponenten verschiedener Art bzw. allgemein Komponenten, die zum Einsatz in Flugzeugen geeignet sind.

Der Vibrationssensor 11 kann beispielsweise durch ein Mikrofon, durch piezoelektrische Bauelemente oder andere Mittel realisiert sein, die Körperschall detektieren und dem Körperschall entsprechende elektrische Signale ausgeben. Als Vibrationssensor 11 wird ein Sensor mit einem besonders geringen Stromverbrauch ausgewählt, der den Körperschall in elektrische Signale umwandelt.

Die elektrischen Vibrationssignale werden über Signalleitungen 11a, 11 b einem Niederfrequenzfilter 21 und parallel dazu einem Schwellwertfilter 22 zugeleitet. Dabei ist das NF-Filter 21 für den Frequenzbereich des Triebwerksschall ausgelegt, während das Schwellwertfilter 22 breitbandig für die Erzeugung der Komparatorschwelle dimensioniert ist.

Sowohl dem NF-Filter 21 als auch dem Schwellwertfilter 22 ist jeweils ein RMS-Konverter 23, 24 nachgeschaltet, wobei die RMS-Konverter 23, 24 die Ausgangssignale der Filter 21, 22 in Effektivwerte umwandeln. Dadurch werden aus den Ausgangssignalen der Filter 21, 22 proportionale Gleichspannungen erzeugt.

Die von den RMS-Konvertern 23, 24 erzeugten Signale bzw. Spannungen werden dem Komparator 30 zugeführt, der das Triebwerksgeräusch mit dem Gesamtgeräusch vergleicht und auf dieser Grundlage entscheidet, ob der Zustand des Fluges vorliegt oder nicht. Die Reaktionszeit des Flug-Sensors 10 wird im RMS-Konverter 23 des NF-Kanals bestimmt, der durch das NF-Filter 21 und den RMS-Konverter 23 gebildet wird.

Zur Energieversorgung ist eine Batterie 25 vorgesehen, die beispielsweise als einfache Lithium-Knopfzelle ausgestaltet ist und die gesamte Schaltung über mehrere Jahre in Betrieb halten kann. Die in dem Blockschaltbild von Figur 1 gezeigte Schaltung ist in Nano-Technologie realisiert, was eine besonders kleine Bauweise und einen sehr geringen Stromverbrauch zur Folge hat. Durch die Bauweise und die Anordnung der verschiedenen Elemente ergeben sich sehr geringe mechanische Abmessungen des Flug-Sensors 10, die in der Größenordnung der handelsüblichen Lithium-Knopfzellen liegen oder zumindest nicht wesentlich größer als derartige Lithium-Knopfzellen sind.

Der Flug-Sensor 10 hindert mittels einer geeigneten Steuereinrichtung insbesondere Funksysteme, die während des Fluges nicht senden dürfen, am Senden, wobei die Steuereinrichtung das Flugzustands-Signal empfängt.

Insbesondere wird mit dem erfindungsgemäßen Flugsensor über verschiedene Kriterien, beispielsweise durch Vergleich und verschiedenen Spektalbereichen, der Amplitudenverhältnisse und dem zeitlichen Verhalten der unterschiedlichen Schallsignale, sicher erkannt, dass sich das entsprechende Bauteil in einem fliegenden oder in einem nicht-fliegenden Flugzeug befindet. Diese Erkenntnis wird als ein digitales Signal ausgegeben, mit dem ein elektronisches Bauteil oder ein Funksender am Senden störender Signale gehindert wird.

Der Flug-Sensor 10 kann aufgrund seiner relativ einfachen und besonders kleinen Bauweise sehr gut mit elektronischen Komponenten für Flugzeuge verbunden bzw. kombiniert werden, so dass das Ausgangssignal des Flugsensors 10 bzw. das Flugzustands-Signal die elektronische Komponente ansteuert, wobei eine Abstrahlung von störenden elektromagnetischen Wellen durch die elektronische Komponente verhindert wird, wenn das Flugzustands-Signal den Zustand "Flug" repräsentiert.

Zur Steuerung der elektronischen Komponente wird der Körperschall durch den Vibrationssensor 11 erfasst und der Anteil von Triebwerksschall eines Flugzeugs wird in dem Körperschall durch die Filtereinrichtung 20 bestimmt. Mittels dem Komparator 30 wird in Abhängigkeit von dem Triebwerksschallanteil das Flugzustands-Signal erzeugt, wobei das Flugzustands-Signal den Zustand "Flug" oder "Nicht-Flug" repräsentiert. Entsprechend diesem Flugzustands-Signal wird die jeweilige elektronische Komponente angesteuert, um eine Abstrahlung von störenden elektromagnetischen Wellen während des Fluges zu verhindern.

Die Erfindung macht sich zunutze, dass das Hauptkriterium für den Flugzustand das Laufen der Triebwerke ist. Insbesondere unterscheiden sich die Laufgeräusche der Triebwerke charakteristisch von allen anderen Schall- bzw. Vibrationsquellen. Durch Bestimmung der Signalanteile bzw. deren Amplitudenverhältnisse und/oder deren zeitlichem Verhalten wird der Flugzustand ermittelt, um mit dem erhaltenen Ergebnis elektronische Komponenten entsprechend anzusteuern, so dass sie, wenn sie sich in einem fliegenden Flugzeug befinden, keine störenden Funkwellen abstrahlen können. Insbesondere können auch verschiedene charakteristische Spektralbereiche in den Vibrationssignalen zur Ermittlung des Flugzustandes herangezogen werden.

## Patentansprüche

1. Flug-Sensor für elektronische Komponenten zum Einsatz in Flugzeugen, mit einem Vibrationssensor (11) zur Umwandlung von Körperschall an Bord eines Flugzeugs in elektrische Vibrationssignale, und einem Komparator (30) zur Erzeugung eines Flugzustands-Signals, das den Flugzustand "Flug" oder "Nicht-Flug" repräsentiert,
**gekennzeichnet durch**
eine Filtereinrichtung (20), welche die Vibrationssignale empfängt und den Anteil von Triebwerksgeräuschen des Flugzeugs und des Gesamtgeräusches in den Vibrationssignalen bestimmt, wobei der Komparator (30) die Triebwerksgeräusche mit dem Gesamtgeräusch vergleicht, um das Flugzustands-Signal zu erzeugen, sodass entsprechend dem Flugzustands-Signal eine elektronische Komponente derart ansteuerbar ist, dass beim Flugzustand "Flug" eine Abstrahlung von störenden elektromagnetischen Wellen verhindert werden kann.

2. Flug-Sensor nach Anspruch 1, **dadurch gekennzeichnet, dass** durch das Flugzustands-Signal eine elektronische Komponente am Senden von Funkwellen gehindert oder nicht gehindert wird.

3. Flug-Sensor nach einem der vorhergehenden Ansprüche, **dadurch gekennzeichnet, dass** die Filtereinrichtung (20) einen NF-Filter (21) umfasst, der für den Frequenzbereich der Triebwerksgeräusche ausgelegt ist.

4. Flug-Sensor nach einem der vorhergehenden Ansprüche, **dadurch gekennzeichnet, dass** die Filtereinrichtung (20) einen breitbandigen Schwellwertfilter (22) zur Erzeugung einer Komparatorschwelle umfasst.

5. Flug-Sensor nach einem der vorhergehenden Ansprüche, **dadurch gekennzeichnet, dass** die Filtereinrichtung (20) mindestens einen RMS-Konverter (23, 24) zur Umwandlung von Filtersignalen in proportionale Gleichspannungen umfasst.

6. Flug-Sensor nach einem der vorhergehenden Ansprüche, **dadurch gekennzeichnet, dass** die Filtereinrichtung (20) einen NF-Kanal (21,23) zur Bestimmung des Anteils der Triebwerksgeräusche und einen zum NF-Kanal parallel geschalteten Schwellwert-Kanal (22, 24) zur Erzeugung einer Komparatorschwelle umfasst.

7. Flug-Sensor nach Anspruch 6, **dadurch gekennzeichnet, dass** der NF-Kanal einen NF-Filter (21) mit einem nachgeschalteten ersten RMS-Konverter (23) umfasst.

8. Flug-Sensor nach Anspruch 6 oder 7, **dadurch gekennzeichnet, dass** der Schwellwert-Kanal einen Schwellwertfilter (22) mit einem nachgeschalteten zweiten RMS-Konverter (24) umfasst.

9. Flug-Sensor nach einem der vorhergehenden Ansprüche, **dadurch gekennzeichnet, dass** der Komparator (30) der Filtereinrichtung (20) nachgeschaltet ist und ein digitales Ausgangssignal als Flugzustands-Signal erzeugt.

10. Elektronische Komponente zum Einsatz in Flugzeugen, **gekennzeichnet durch** einen Flug-Sensor (10) nach einem der Ansprüche 1 bis 9.

11. Verfahren zur Steuerung elektronischer Komponenten an Bord von Flugzeugen, **gekennzeichnet durch** die Schritte:
Erfassen von Körperschall an Bord eines Flugzeugs;
Bestimmen des Anteils von Triebwerksschall des Flugzeuges in dem Körperschall;
Erzeugen eines Flugzustands-Signals in Abhängigkeit vom Triebwerksschallanteil, wobei das Flugzustands-Signal den Zustand "Flug" oder "Nicht-Flug" repräsentiert;
Ansteuern einer elektronischen Komponente mit dem Flugzustands-Signal derart, dass beim Zustand "Flug" eine Abstrahlung von störenden elektromagnetischen Wellen verhindert wird.

12. Verfahren nach Anspruch 11, **dadurch gekennzeichnet, dass** der Triebwerksschall mit dem gesamten erfassten Schall verglichen wird und auf der Grundlage des Vergleichs über den Zustand "Flug" oder "Nicht-Flug" entschieden wird.

13. Verfahren nach Anspruch 11 oder 12 , **dadurch gekennzeichnet, dass** die elektronische Komponente abgeschaltet wird, wenn das Flugzustands-Signal den Zustand "Flug" repräsentiert.

14. Verfahren nach einem der Ansprüche 11 bis 13, **dadurch gekennzeichnet, dass** zur Durchführung ein Flug-Sensor (10) nach einem der Ansprüche 1 bis 9 verwendet wird.

## Claims

1. A flight sensor for electronic components to be used in aircraft, with a vibration sensor (11) for converting mechanical vibrations on board an aircraft into electrical vibration signals, and a comparator (30) for generating a flight status signal representing the flight status "flight" or "no flight",
**characterized by**
a filtering device (20) that receives the vibration signals and determines the percentage of aircraft propulsion system noises and overall noises in the vibration signals, wherein the comparator (30) compares the propulsion system noises with the overall noises to generate the flight status signal, so that an electronic component can be actuated according to the flight status signal so as to be able to prevent the emission of disturbing electromagnetic waves.

2. The flight sensor according to claim 1, **characterized in that** the flight status signal prevents or does not prevent an electronic component from sending radio waves.

3. The flight sensor according to one of the preceding claims, **characterized in that** the filtering device (20) encompasses an LF filter (21), which is designed for the frequency range of propulsion system noises.

4. The flight sensor according to one of the preceding claims, **characterized in that** the filtering device (20) encompasses a broadband threshold filter (22) for generating a comparator threshold.

5. The flight sensor according to one of the preceding claims, **characterized in that** the filtering device (20) encompasses at least one RMS converter (23, 24) for converting filter signals into proportional direct current voltages.

6. The flight sensor according to one of the preceding claims, **characterized in that** the filtering device (20) encompasses an LF channel (21, 23) for determining the percentage of propulsion system noises and a threshold channel (22, 24) parallel connected to the LF channel for generating a comparator threshold.

7. The flight sensor according to claim 6, **characterized in that** the LF channel encompasses an LF filter (21) with a downstream first RMS converter (23).

8. The flight sensor according to claim 6 or 7, **characterized in that** the threshold channel encompasses a threshold filter (22) with a downstream second RMS converter (24).

9. The flight sensor according to one of the preceding claims, **characterized in that** the comparator (30) is downstream from the filtering device (20), and generates a digital output signal as the flight status signal.

10. An electronic component for use in aircraft, **characterized by** a flight sensor (10) according to one of claims 1 to 9.

11. A method for controlling electronic components on board aircraft, **characterized by** the following steps:
Detecting mechanical vibrations on board an aircraft;
Determining the percentage of aircraft propulsion system noise in the mechanical vibrations;
Generating a flight status signal as a function of the propulsion system noise percentage, wherein the flight status signal represents the status "flight" or "no flight";
Actuating an electronic component with the flight status signal so as to prevent the emission of disturbing electromagnetic waves given a "flight" status.

12. The method according to claim 11, **characterized in that** the propulsion system noise is compared with the overall detected noise, and a decision as to a "flight" or "no flight" status is made based upon the comparison.

13. The method according to claim 11 or 12, **characterized in that** the electronic component is deactivated when the flight status signal represents the "flight" status.

14. The method according to one of claims 11 to 13, **characterized in that** a flight sensor (10) according to one of claims 1 to 9 is used for implementation.

## Revendications

1. Détecteur de vol pour composants électroniques à utiliser dans des avions, comprenant un capteur de vibrations (11) pour la conversion de bruit de structure à bord d'un avion en signaux de vibrations électriques, et un comparateur (30) pour générer un signal d'état de vol, qui représente l'état de vol « vol » ou « non vol », **caractérisé par** un dispositif de filtrage (20), qui reçoit les signaux de vibrations et détermine la part des bruits de moteur de l'avion et du bruit total dans les signaux de vibrations, le comparateur (30) comparant les bruits de moteur au bruit total pour générer le signal d'état de vol, si bien qu'un composant électronique peut être commandé en fonction du signal d'état de vol de telle sorte que, dans l'état de vol « vol », une émission d'ondes électromagnétiques parasites peut être empêchée.

2. Détecteur de vol selon la revendication 1, **caractérisé en ce que** le signal d'état de vol empêche ou n'empêche pas un composant électronique d'émettre des ondes radioélectriques.

3. Détecteur de vol selon l'une des revendications précédentes, **caractérisé en ce que** le dispositif de filtrage (20) comporte un filtre NF (21), conçu pour la gamme de fréquences des bruits de moteur.

4. Détecteur de vol selon l'une des revendications précédentes, **caractérisé en ce que** le dispositif de filtrage (20) comporte un filtre de valeur de seuil à large bande (22) pour générer un seuil de comparateur.

5. Détecteur de vol selon l'une des revendications précédentes, **caractérisé en ce que** le dispositif de filtrage (20) comporte au moins un convertisseur RMS (23, 24) pour la conversion de signaux de filtrage en tensions continues proportionnelles.

6. Détecteur de vol selon l'une des revendications précédentes, **caractérisé en ce que** le dispositif de filtrage (20) comporte un canal NF (21, 23) pour la détermination de la part des bruits de moteur et un canal de valeur de seuil (22, 24), monté en parallèle du canal NF, pour générer un seuil de comparateur.

7. Détecteur de vol selon la revendication 6, **caractérisé en ce que** le canal NF comporte un filtre NF (21) avec un premier convertisseur RMS (23) aval.

8. Détecteur de vol selon l'une des revendications 6 et 7, **caractérisé en ce que** le canal de valeur de seuil comporte un filtre de valeur de seuil (22) avec un second convertisseur RMS (24) aval.

9. Détecteur de vol selon l'une des revendications précédentes, **caractérisé en ce que** le comparateur (30) est monté en aval du dispositif de filtrage (20) et génère un signal de sortie numérique en tant que signal d'état de vol.

10. Composant électronique à utiliser dans des avions, **caractérisé par** un détecteur de vol (10) selon l'une des revendications 1 à 9.

11. Procédé de commande de composants électroniques à bord d'avions, **caractérisé par** les étapes suivantes :
détection de bruit de structure à bord d'un avion ;
détermination de la part de bruit de moteur de l'avion dans le bruit de structure ;
génération d'un signal d'état de vol en fonction de la part de bruit de moteur, le signal d'état de vol représentant l'état « vol » ou « non vol » ;
commande d'un composant électronique par le signal d'état de vol de telle sorte que, dans l'état « vol », une émission d'ondes électromagnétiques parasites est empêchée.

12. Procédé selon la revendication 11, **caractérisé en ce que** le bruit de moteur est comparé au bruit total détecté et l'état « vol » ou « non vol » est décidé sur la base de la comparaison.

13. Procédé selon l'une des revendications 11 et 12, **caractérisé en ce que** le composant électronique est déconnecté, lorsque le signal d'état de vol représente l'état « vol ».

14. Procédé selon l'une des revendications 11 à 13, **caractérisé en ce qu'**un détecteur de vol (10) selon l'une des revendications 1 à 9 est utilisé pour sa mise en oeuvre.
